# EUROPÄISCHE PATENTANMELDUNG

(11) **EP 0 592 935 A2**
(43) Veröffentlichungstag der Anmeldung: **20.04.1994**
(21) Anmeldenummer: 93116146.7
(22) Anmeldetag: 06.10.1993
(51) Int. Cl.: C08F 220/38

(54) **Schwefelhaltige Poly(meth)-acrylate**

(30) Priorität: 10.10.1992 DE 4234251
(71) Anmelder: RÖHM GMBH, D-64293 Darmstadt (DE)
(72) Erfinder: Bader, Martina Dr., D-64347 Griesheim (DE); Hartmann, Patrik, D-64572 Büttelborn (DE); Schwinn, Gerhard, D-64807 Dieburg (DE)

(57) **Zusammenfassung**

Die Erfindung betrifft schwefelhaltige Polymethacrylate P hergestellt durch radikalische Polymerisation von Monomeren der Formel I 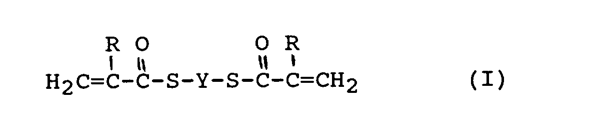
worin
Y für einen gegebenenfalls verzweigten, gegebenenfalls cyclischen Alkylrest mit 2 bis 12 Kohlenstoffatomen oder einem Arylrest mit 6 - 14 Kohlenstoffatomen oder einem Alkarylrest mit 7 bis 20 Kohlenstoffatomen, wobei die Kohlenstoffkette durch eine oder mehrere Ether- oder Thioethergruppen unterbrochen sein können und

worin
R für Wasserstoff oder Methyl steht,

wobei zusätzlich zu den Monomeren der Formel I Anteile mindestens eines Monomeren der Formel II 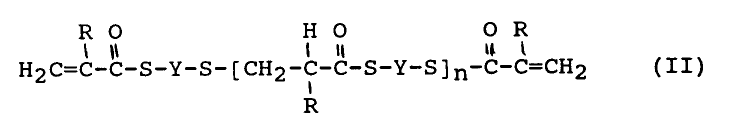
worin R und Y die vorstehend bezeichneten Bedeutungen besitzen und
n eine ganze Zahl im Bereich 1 bis 6 darstellt,

im Polymerisat P einpolymerisiert sind.

## Beschreibung

### Gebiet der Erfindung

Die Erfindung betrifft schwefelhaltige Polyacrylate bzw. -methacrylate für optische Anwendungen.

### Stand der Technik

Schwefelhaltige Polymere, gelten als potentielle Werkstoffe für optische Anwendungen. Bei genügend hohem Schwefelgehalt erhält man hochlichtbrechende Polymerisate mit geringer Dispersion des Lichtes.

Ester der Thio(meth)acrylsäure können als Polymerbausteine besonderes Interesse beanspruchen, da sie einen relativ hohen Schwefelgehalt besitzen. Auch die Poly(meth)acrylsäureester von Polythiolen wie sie in EP 273 661 und in EP-A 0 394 495 beschrieben sind, stellen geeignete Monomere für die Herstellung optischer Materialien dar (EP-A 0 273 710). Gerade bei Anwendungen auf dem Gebiet der Optik sind besonders hohe Anforderungen an die Einheitlichkeit und die Reinheit der Ausgangsmaterialien zu richten. Zur Entfernung von Verunreinigungen und Nebenprodukten hat man bisher die Destillation der Monomeren bevorzugt, die jedoch vor allem bei hochsiedenden Verbindungen zu Ausbeuteverlusten infolge teilweiser Polymerisation, Zersetzung u.ä. führt.

Bedingt durch den hohen Siedepunkt und die damit verbundene Gefahr der thermisch induzierten Polymerisation erweist es sich als technisch nicht machbar, höhere Polythio(meth)acrylate durch Destillation zu reinigen.

Es sind auch (Meth)acrylsäureester von Thioetheralkoholen beschrieben (z.B. DE-A 38 38 350): Allerdings erreichen weder diese noch die in EP-A 0 284 374 beanspruchten Vinylverbindungen, hergestellt durch Michael-Addition von mehrfunktionellen Mercaptanen an mehrfach ungesättigte Verbindungen einen hinreichenden Schwefelgehalt. Siehaben daher eine zu niedrige Brechungszahl, wenn auch die Dispersion die erwünschten niederen Werte aufweist.

### Aufgabe und Lösung

Es bestand somit nach wie vor Bedarf an transparenten Kunststoffen mit hoher Lichtbrechung, die nach Möglichkeit technisch leicht zugänglich sein sollten.

Gemäß dem im folgenden geschilderten Verfahren, das den Gegenstand der deutschen Patentanmeldung P 42 34 257.0 mit gleichem Zeitrang bildet, lassen sich, ausgehend von (Meth)acrylsäureanhydrid, Thio-(meth)acrylsäureestern mit genügender Reinheit für alle üblichen Verwendungen herstellen. Dabei wird das - vorzugsweise in einem inerten, nicht wassermischbaren Lösungsmittel gelöste - (Meth)acrylsäureanhydrid mit einem gegebenenfalls substituierten Alkyl- oder Arylthiol mit bis zu 24 Kohlenstoffatomen, vorzugsweise in wäßrigem, alkalischem Milieu, umgesetzt. Bei der Anwendung dieses Verfahrens auf Polythiole entsteht als ein Nebenprodukt zu wesentlichen Anteilen ein Thioetherpolythio(meth)acrylat. Die nämliche Verbindung entsteht auch bei Umsetzung von Methacrylsäurechlorid mit Polythiolen.

Das übliche Vorgehen des Fachmanns besteht in vergleichbaren Fällen in der Auftrennung der Reaktionskomponenten und der Abtrennung der unerwünschten Nebenprodukte, im vorliegenden Falle: der Thioetherpolythio(meth)acrylate mit den erprobten Hilfsmitteln, beispielsweise mittels Destillation oder mit Hilfe der Chromatographie. Jedoch war abzusehen, daß eine Abtrennung dieser Verbindung durch die aufwendige, ausbeutegefährdende Destillation oder die gleichermaßen aufwendige, kostspielige Chromatographie einer industriellen Verwertung hindernd im Wege stehen würde.

Es wurde nun gefunden, daß überraschenderweise das Polymerisat aus dem Gemisch der bei den Herstellungsverfahren erhaltenen, nicht aufgetrennten Produkte bessere Gebrauchseigenschaften aufweist als die entsprechenden Polymerisate aus den gereinigten Monomeren. So zeigt das Poly(ethandithioldimethacrylat) weitaus schlechtere mechanische Eigenschaften als das Copolymerisat des Monomerengemischs, das bei dessen Herstellung anfällt.

Die vorliegende Erfindung betrifft somit schwefelhaltige Poly(meth)acrylate P, die durch radikalische Polymerisation von Anteilen mindestens eines Monomeren der Formel I 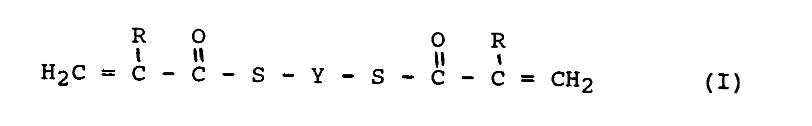 worin
Y für einen gegebenenfalls verzweigten, gegebenenfalls cyclischen Alkylrest mit 2 bis 12 Kohlenstoffatomen oder einen Arylrest mit 6 bis 14 Kohlenstoffatomen oder einen Alkarylrest mit 7 bis 26 Kohlenstoffatomen, wobei Kohlenstoffketten durch eine oder mehrere Ether- oder Thioethergruppen unterbrochen sein können und

worin
R für Wasserstoff oder Methyl steht,

und Anteilen mindestens eines Monomeren der Formel 11, 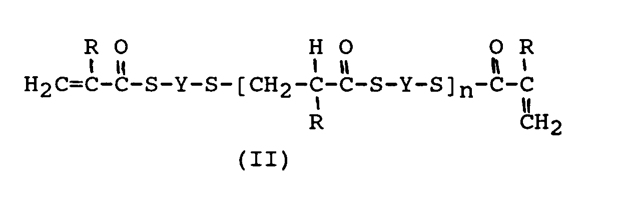
worin
R und Y die oben bezeichneten Bedeutungen besitzen und
n eine ganze Zahl im Bereich 1 bis 6 darstellt,

gebildet werden.

Im allgemeinen stehen die Monomeren der Formeln I und II im molaren Verhältnis 1 : 0,5 bis 0,5 : 1, jedoch sind auch abweichende Molverhältnisse wie 1 : 0,2 tolerierbar.

Insbesondere betrifft die vorliegende Erfindung schwefelhaltige Polymethacrylate P, die durch radikalische Polymerisation der Verfahrensprodukte V aus der Umsetzung von mindestens zwei Molen der Verbindung der Formel III 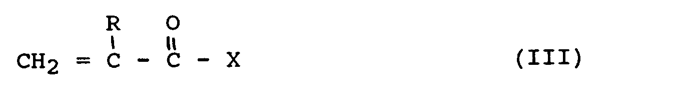
worin
X für Chlor oder einen Rest 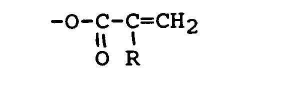 und
R für Wasserstoff oder Methyl

mit einem Mol eines Polythiols der Formel IV 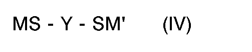
worin
Y die oben bezeichneten Bedeutungen besitzt und,
   worin
M und M' für Wasserstoff oder ein Metallkation, insbesondere ein Alkalikation wie Natrium oder Kalium steht,

nach Abtrennung der nicht an der Umsetzung beteiligten Komponenten (d.h. im wesentlichen der Lösungsmittel L und der wäßrigen Phase), erhalten werden.

Vorzugsweise stellt die Verbindung der Formel III das (Meth)acrylsäureanhydrid dar. Bei dieser Umsetzung wird ein Anion X- freigesetzt, das, sofern M für Wasserstoff steht, durch den Basenzusatz in ein Neutralsalz umgewandelt wird.

Das zu den Verfahrensprodukten V führende Verfahren wird vorteilhaft so ausgeführt, daß man die Verbindung der Formel 111, in einem inerten, organischen Lösungsmittel L, vorzugsweise einem nicht wassermischbaren und in Anwesenheit eines oder mehrerer an sich bekannter Polymerisationsinhibitoren IH in Mengen von 0,01 bis 1,0 Gew.-% bezogen auf III gelöst vorgelegt und in diese Lösung, vorzugsweise unter Rühren und mit Kühlung, beispielsweise Eiskühlung die wäßrige Lösung des Polythiols der Formel IV in einer Base, bevorzugt in wäßrig-alkalischer Lösung zutropft. Vorteilhafterweise befindet sich die Ausgangsverbindung der Formel III dabei in einem, wenn auch nur geringen, molaren Überschuß, beispielsweise 2,05 bis 2,2-fach molar über die Verbindung der Formel IV. In der Regel hält man den pH-Wert im Bereich pH 7 bis 10. Die Reaktion kann beispielsweise mit Hilfe eines Phasentransfer-Katalysators durchgeführt werden (vgl. O.W. Webster et al. J. Am. Chem. Soc. 105, 5706).

Man läßt über einen gewissen Zeitraum reagieren, beispielsweise 3 Stunden bei Temperaturen oberhalb Raumtemperatur, z.B. bei 40 Grad C. Vorteilhafterweise trennt man die organische Phase ab und wäscht mit Wasser und/oder einer wäßrig-alkalischen Lösung (pH ca. 12). Anschließend entfernt man das Lösungsmittel L vorzugsweise durch Destillation im Vakuum, beispielsweise am Rotationsverdampfer.

Das hinterbleibende Verfahrensprodukt V kann, wie oben ausgeführt, als solches in die Polymerisation eingesetzt werden.

Es fällt in der Regel ein farbloses Monomerengemisch, enthaltend als Komponenten die Verbindungen der Formeln I und 11 (n = 1, 2, 3 usw.) an. Die Verbindung der Formel 11, worin n = 1 seht, läßt sich auch gaschromatographisch nachweisen. Die höheren Addukte sind dünnschichtchromatographisch nachweisbar und mittels Säulenchromatographie auch abtrennbar.

Als inerte organische Lösungsmittel L seien beispielsweise Ether wie Methyl-tert.butylether (MTBE) oder aromatische Kohlenwasserstoffe wie Toluol, Xylol genannt.

Besonders erwähnt seien als Verbindungen der Formel IV das 1,2-Ethan-dithiol, das 1,3-Propandithiol, das 1,4-Butandithiol, das 1,6-n-Hexandithiol, das 1,6-Cyclohexyldithiol.

Die vorliegende Erfindung betrifft schließlich das Polymerisationsverfahren selbst, das zu den schwefelhaltigen Polymethacrylaten P führt.

Nach dem erfindungsgemäßen Verfahren werden die Monomeren der Formel I zusammen mit den Monomeren der Formel 11 in Mischung oder in einem gemeinsamen Lösungsmittel LG unter Zusatz eines oder mehrer Radikal-Initiatoren bei erhöhter Temperatur polymerisiert.

In einfacher Form kann die Polymerisation der beiden Komponenten I und 11 ohne Lösungsmittelzusatz nach Zumischen des Initiators im geschlossenen Gefäß, bei keineren Ansätzen in einer, vorzugsweise im Vakuum abgeschmolzenen, Ampulle vorgenommen werden.

Vorteilhafterweise läßt man die Polymerisation bei erhöhter Temperatur (Wasserbad) anspringen und steigert sie dann schrittweise über einen längeren Zeitraum.

Als Radikalinitiatoren können die an sich bekannten, beispielsweise Azoinitiatoren wie Azo-bis-isobutyronitril in den üblichen Konzentrationen wie z.B. 0,1 bis 1 Gew.-% bezogen auf die Monomeren Anwendung finden (vgl. H. Rauch-Puntigam, Th. Völker, Acryl- und Methacrylverbindungen, Springer-Verlag 1968). Als Anhalt sei ein Temperaturprofil angegeben, das sich von 40 Grad C über ca. 26 Stunden auf 90 Grad C steigert.

Den erfindungsgemäßen Polymerisaten P können noch einschlägig bekannte Additive, beispielsweise UV-Absorber, Antioxidantien und gegebenenfalls Farbmittel, zugesetzt werden (vgl. Gaechter u. H. Müller, Taschenbuch der Kunststoff-Additive, Hanser-Verlag 1979).

Die erhaltenen schwefelhaltigen Polymerisate P sind farblos, hart und leicht spröde.

### Vorteilhafte Wirkungen

Die sich aus der Herstellungsweise der erfindungsgemäßen Polymerisate P ergebenden Vorteile liegen auf der Hand. Auf die aufwendige und ggfls. verlustreiche Aufreinigung der Ausgangsprodukte vom Typ I kann verzichtet werden. Die Polymerisate P sind in ihren optischen und sonstigen Eigenschaften den Homopolymerisaten aus den Monomeren der Formel I keineswegs unterlegen. Hervorzuheben ist die Transparenz, Wärmestandfestigkeit und Bearbeitbarkeit insbesondere mit sägenden und spanenden Werkzeugen. Sie dienen zur Anwendung auf dem Gebiet der Optik, beispielsweise als optische Materialien wie Gläser, Linsen, optische Komponenten u.ä.

Die folgenden Beispiele dienen zur Erläuterung der Erfindung. Dabei wird die Bestimmung des Brechungsindex und der Abbe-Zahl mit Hilfe eines Abbe-Refraktometers vorgenommen. Die Abbe-Zahl kann der Dispersionstabelle entnommen werden (vgl. DIN 53 491, Ullmanns Encyclopädie der Technischen Chemie, 4. Auflage, Bd. 15, S. 368, Verlag Chemie 1978).

### BEISPIELE

### Beispiel A:

### Herstellung der Ausgangsverbindungen der Formeln I und 11 (= Verfahrensprodukte V)

Man legt die Menge der Verbindung der Formel 111, vorzugsweise das Anhydrid im 1,05 bis 1,2-fachen molaren Überschuß (stabilisiert mit ca. 1 000 ppm 4-Methyl-2,6-ditert.butylphenol pro Mol) in etwa der zweifachen Menge Methyl-tert.butylether in einem mit Rührer versehenen Reaktionsgefäß vor und tropft unter Eiskühlung eine Lösung des Polythiols der Formel IV in etwa der acht-fachen Gewichtsmenge 10 %ige Natronlauge zu. Es wird 3 Stunden bei 40 Grad C nachgerührt. Man trennt nun die organische Phase ab und wäscht sie mit Wasser nach. Nach dem Trocknen und Entfernen des Lösemittels am Rotationsverdampfer erhält man die Verfahrensprodukte V als farbloses Monomerengemisch bestehend aus den Monomeren der Formeln I und 11, in dem die Additionsverbindungen mit n = 1, 2, 3 ...6 enthalten sind, das sich als solches als Ausgangsprodukt zur Herstellung der erfindungsgemäßen Polymerisate P eignet. Die Verbindungen der Formel 11 in der n für 1 steht sind auch mit der GC nachweisbar.

Nach der vorstehenen Vorschrift werden z.B. gewonnen:
Verfahrensprodukte V-1, ausgehend von 1,2-Ethandithiol enthaltend 1,2-Ethandithioldimethacrylat Verfahrensprodukte V-2, ausgehend von 1,3-Propandithiol enthaltend 1,3-Propandithioldimethacrylat

### Beispiel B:

### Polymerisation der Verfahrensprodukte V zu den Polymerisaten P

Allgemeine Vorschrift:
10 ml Verfahrensprodukt V aus den Beispielen A werden mit 0,4 Gew.-%, 2,2'-Azobis(isobutyronitril) versetzt und in einer Ampulle, die zweckmäßig im Vakuum abgeschmolzen wurde, in einem Wasserbad polymerisiert, wobei die Wasserbadtemperatur schrittweise innerhalb von 26 Stunden von 40 Grad C auf 90 Grad C erhöht wird.

Aus dem Verfahrensprodukt V-1 (ausgehend von 1,2-Ethandithiol) erhält man ein farbloses, hartes und leicht sprödes Material P-1 mit einem Brechungsindex von 1,6079 und einer Abbe-Zahl von 35.

Aus dem Verfahrensprodukt V-2 (ausgehend von 1,3-Propandithioldimethacrylat) erhält man ein klares, hartes Polymerisat mit einer Brechzahl von 1,6020 und einer Abbe-Zahl von 38.

### Beispiel C: Vergleichsbeispiel

### Herstellung und Polymerisation von reinem Ethandithioldimethacrylat

Unter Rühren und Eiskühlung wird zu einer Lösung von 104,5 g Methacrylsäurechlorid in 1 I Toluol eine Lösung von 47,1 g Ethandithiol und 140 ml Triethylamin innerhalb 2 Stunden unter Einhaltung einer Temperatur im Reaktionsgemisch von ca. 20 Grad C zugetropft. Nach Zutropfende wird noch 3 Stunden bei Raumtemperatur gerührt. Es wird vom gebildeten Salz filtriert. Nach Entfernen des Lösemittels am Rotationsverdampfer wird eine Vakuumdestillation durchgeführt. Man erhält 31,1 g Ethandithioldimethacrylat (27 % d.Th., Kp. 123 - 126 Grad C/0,07 - 0,1 mbar).

10 ml diese gereinigten Produktes werden gemäß Beispiel B polymerisiert. Man erhält ein klares, hartes Polymerisat, welches sehr spröde und mit Rissen durchsetzt ist und somit nicht mechanisch (z.B. sägend) behandelt werden kann.

## Patentansprüche

1. Schwefelhaltige Polymethacrylate P hergestellt durch radikalische Polymerisation von Monomeren der Formel I 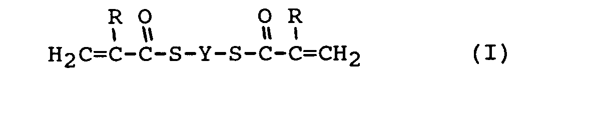
worin
Y für einen gegebenenfalls verzweigten, gegebenenfalls cyclischen Alkylrest mit 2 bis 12 Kohlenstoffatomen oder einem Arylrest mit 6 - 14 Kohlenstoffatomen oder einem Alkarylrest mit 7 bis 20 Kohlenstoffatomen, wobei die Kohlenstoffkette durch eine oder mehrere Ether-oder Thioethergruppen unterbrochen sein können und worin
R für Wasserstoff oder Methyl steht, dadurch gekennzeichnet,
daß zusätzlich zu den Monomeren der Formel I Anteile mindestens eines Monomeren der Formel II 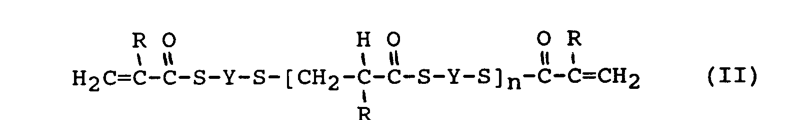
worin
R und Y die vorstehend bezeichneten Bedeutungen besitzen und
n eine ganze Zahl im Bereich 1 bis 6 darstellt,
im Polymerisat P einpolymerisiert sind.

2. Schwefelhaltige Polymethacrylate P gemäß Anspruch 1, dadurch gekennzeichnet, daß sie hergestellt wurden durch Polymerisation der unmittelbaren Verfahrensprodukte V aus der Umsetzung einer Verbindung der Formel III 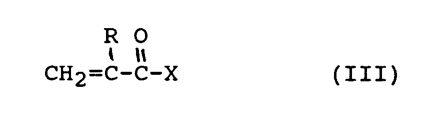
worin
X für Chlor oder einen Rest 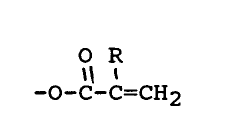 und
R für Wasserstoff oder Methyl steht,
mit einem Polythiol der Formel IV 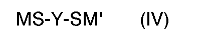
worin
Y die gleichen Bedeutungen wie in Formel I besitzen und
M und M' für Wasserstoff oder ein Metallkation
steht.

3. Verfahren zur Herstellung von Verfahrensprodukten V gemäß Anspruch 2 enthaltend die Verbindungen der Formel I, dadurch gekennzeichnet, daß man mindestens zwei Mole einer Verbindung der Formel (111) 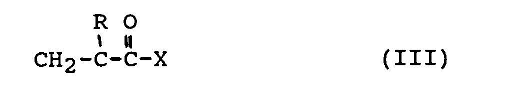
worin
X für Chlor oder für einen Rest 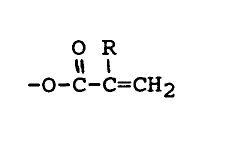 und
R für Wasserstoff der Methyl steht
mit einem Mol eines Polythiols der Formel IV 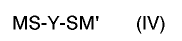
worin
Y für einen gegebenenfalls verzweigten, gegebenenfalls cyclischen Alkylrest mit 2 bis 12 Kohlenstoffatomen oder einem Arylrest mit 6 - 14 Kohlenstoffatomen oder einen Alkarylrest mit 7 bis 20 Kohlenstoffatomen, wobei die Kohlenstoffketten durch eine oder mehrere Ether-oder Thioethergruppen unterbrochen sein können, steht,
umsetzt, wobei die Verbindung der Formel 111 in einem inerten, organischen Lösungsmittel L und die Verbindung der Formel IV in wäßrig-alkalischer Lösung zur Reaktion gebracht, die aus dem Lösungsmittel L bestehende organische Phase abgetrennt, gegebenenfalls gewaschen, getrocknet und das Lösungsmittel L verdampft wird.

4. Verfahren gemäß Anspruch 3, dadurch gekennzeichnet, daß die Verbindung der Formel III im molaren Verhältnis 2,05 bis 2,2 bezogen auf das Polythiol der Formel IV zur Anwendung kommt.
